(19) Europäisches Patentamt
European Patent Office
Office européen des brevets

(11) **EP 2 518 195 B1**

(12) **EUROPEAN PATENT SPECIFICATION**

(45) Date of publication and mention of the grant of the patent:
**31.10.2018 Bulletin 2018/44**

(21) Application number: **10839710.0**

(22) Date of filing: **14.12.2010**

(51) Int Cl.:
*D01F 6/62* (2006.01)    *D03D 1/02* (2006.01)
*D06M 11/77* (2006.01)    *D06M 15/564* (2006.01)
*D06M 15/21* (2006.01)    *D06M 15/693* (2006.01)
*B60R 21/235* (2006.01)    *D03D 15/00* (2006.01)
*D06M 15/263* (2006.01)    *D06M 15/643* (2006.01)
*D01D 5/12* (2006.01)

(86) International application number:
**PCT/KR2010/008942**

(87) International publication number:
**WO 2011/078513 (30.06.2011 Gazette 2011/26)**

(54) **POLYETHYLENE TEREPHTHALATE FIBER FOR AIR-BAGS AND TEXTILES MADE FROM SAME**

POLYETHYLEN-TEREPHTHALAT-FASER FÜR AIRBAGS SOWIE DARAUS HERGESTELLTE TEXTILIEN

FIBRE DE POLYÉTHYLÈNE TÉRÉPHTALATE POUR COUSSINS DE SÉCURITÉ GONFLABLES ET TEXTILES FABRIQUÉS AVEC CETTE FIBRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2009 KR 20090130817**
**29.12.2009 KR 20090132770**

(43) Date of publication of application:
**31.10.2012 Bulletin 2012/44**

(73) Proprietor: **HYOSUNG ADVANCED MATERIALS CORPORATION**
**Seoul, 04144 (KR)**

(72) Inventors:
• **JUNG, Il Won**
**Bucheon-si**
**Gyeonggi-do 422-231 (KR)**
• **YANG, Seung Cheol**
**Anyang-si**
**Gyeonggi-do 431-795 (KR)**
• **YU, Je An**
**Seoul 158-753 (KR)**

(74) Representative: **Katzameyer, Michael et al**
**v. Bezold & Partner**
**Patentanwälte - PartG mbB**
**Akademiestraße 7**
**80799 München (DE)**

(56) References cited:
EP-A2- 1 845 177    WO-A2-2010/123298
JP-A- 7 048 717    JP-A- 8 134 717
JP-A- 8 158 153    JP-A- H0 835 116
JP-A- H06 313 265    JP-A- 2007 182 646
US-A- 5 540 965    US-A1- 2005 153 609

**Description**

[Technical Field]

The present invention relates to a polyethylene terephthalate fiber for air bags and a textile for air bags made from the same, and, more particularly, to a textile for air bags having an improved rupture property at a sewn welt portion so that a polyethylene terephthalate multifilament made by spinning polyethylene terephthalate chips having an intrinsic viscosity of 0.8 to 1.3 can be prevented from rupturing in an air bag cushion deployment test when the polyethylene terephthalate multifilament is applied to the textile for air bags by adjusting a strength/deformation curve of the polyethylene terephthalate multifilament.

[Background Art]

A textile for air bags requires a variety of characteristics such as low poromericity to smoothly deploy an air bag upon collision, high energy absorption capability to prevent damage/breakage of an air bag itself, and foldability for a textile itself to improve storage. A Nylon 66 material has been widely used as a fiber that is suitable for the requirements of such an air bag textile. In recent years, increasing attention has been paid to fiber materials other than Nylon 66 due to their economic efficiency, for example, cost savings, etc.

In order to apply a polyethylene terephthalate yarn to an air bag, an air bag rupturing problem should be solved in an air bag cushion module deployment test. For this purpose, attempts have been made to improve the energy absorption capability of a polyethylene terephthalate air bag and prevent an air bag from rupturing at a sewn welt portion of the air bag as the air bag expands.

[Disclosure]

[Technical Problem]

The present invention is directed to providing a textile for air bags made from a polyethylene terephthalate fiber having an improved rupture property at a sewn welt portion so that a polyethylene terephthalate multifilament can be prevented from rupturing in an air bag cushion deployment test by adjusting a strength/deformation curve of the polyethylene terephthalate multifilament.

[Technical Solution]

One aspect of the present invention provides a polyethylene terephthalate multifilament for air bags made by spinning polyethylene terephthalate chips having an intrinsic viscosity of 0.8 to 1.3. Here, the polyethylene terephthalate multifilament for air bags is characterized in that it has a strength/deformation curve in which the polyethylene terephthalate multifilament extends by less than 4% when subjected to an initial stress of 1.0 g/d at room temperature, extends by less than 12% when subjected to a medium stress of 4.5 g/d and extends by 3% or more until fibers are cut at a tensile strength of at least 7.0 g/d, and has an elongation at break of 15% or more and a single fiber thickness of 5 deniers or less.

The polyethylene terephthalate multifilament has a coefficient of kinetic friction of 1.5 or more, in case which is calculated by dividing an F/F coefficient of kinetic friction of a yarn by an F/M coefficient of kinetic friction of the yarn.

The polyethylene terephthalate multifilament has a carboxyl end group (CEG) content of 35 mmol/kg or less.

And the polyethylene terephthalate multifilament has a maximum thermal stress of 0.2 to 0.5 g/d.

According to another exemplary embodiment of the present invention, the polyethylene terephthalate multifilament has a total fiber thickness of 150 to 1,000 deniers.

Another aspect of the present invention provides a textile for air bags which is woven from the polyethylene terephthalate multifilament. Here, the textile for air bags is prepared by coating the textile for air bags with one coating agent selected from the group consisting of a silicon-based coating agent, a polyurethane-based coating agent, an acrylic coating agent, a neoprene-based coating agent and a chloroprene-based coating agent at a content of 15 to 60 g/m$^2$.

[Advantageous Effects]

According to the present invention, a textile for air bags having an improved rupture property at a welt portion in an air bag cushion deployment test can be prepared using a polyethylene terephthalate fiber that can be prepared from the polyethylene terephthalate multifilament. Here, the polyethylene terephthalate multifilament has a strength/deformation curve in which the polyethylene terephthalate fiber extends by less than 4% when subjected to an initial stress of 1.0 g/d at room temperature, extends by less than 12% subjected to a medium stress of 4.5 g/d and extends by 3% or more until fibers are cut at a tensile strength of at least 7.0 g/d, and has an elongation at break of 15% or more, a value of 1.5 or more, in case which is obtained by dividing an F/F coefficient of kinetic friction of a yarn by an F/M coefficient of kinetic friction of the yarn, a carboxyl end group (CEG) content of 35 mmol/kg or less, and a single fiber thickness of 5 deniers or less.

[Mode for Invention]

Hereinafter, exemplary embodiments of the present invention will be described in detail. However, the present invention is not limited to the embodiments disclosed below, but can be implemented in various forms. The following embodiments are described in order to enable those of ordinary skill in the art to embody and practice the present invention.

Although the terms first, second, etc. may be used to describe various elements, these elements are not limited by these terms. These terms are only used to distinguish one element from another. For example, a first element could be termed a second element, and, similarly, a second element could be termed a first element, without departing from the scope of exemplary embodiments. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of exemplary embodiments. The singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, components and/or groups thereof, but do not preclude the presence or addition of one or more other features, integers, steps, operations, elements, components and/or groups thereof.

The present invention is directed to providing a textile for air bags having an improved rupture property at a sewn welt portion so that a polyethylene terephthalate multifilament as specified in present claim 1, made by spinning polyethylene terephthalate chips having an intrinsic viscosity of 0.8 to 1.3 can be prevented from rupturing in an air bag cushion deployment test when the polyethylene terephthalate multifilament is applied to the textile for air bags by adjusting a strength/deformation curve of the polyethylene terephthalate multifilament.

In order for a textile for air bags to safely absorb instantaneous impact energy of an exhaust gas generated by explosion of gunpowder in an air bag, a polyethylene terephthalate multifilament obtained by spinning polyethylene terephthalate chips having an intrinsic viscosity (IV) of 0.8 to 1.3 is used in the present invention. A polyester yarn in which a resin has an intrinsic viscosity of less than 0.8 dl/g is not desirable since the polyester yarn does not have sufficient toughness.

The polyethylene terephthalate fiber according to the present invention has a carboxyl end group (CEG) content of 35 mmol/kg or less. When the CEG content of the polyethylene terephthalate yarn exceeds 35 mmol/kg, hydrolysis resistance of a yarn may be degraded, and thus it is difficult to maintain performance of a textile for air bags under high temperature and humidity conditions.

A fiber suitable for use as the polyethylene terephthalate multifilament for air bags according to the present invention extends by less than 4% when the fiber is subjected to an initial stress of 1.0 g/d in a strength/deformation curve. When the polyethylene terephthalate multifilament extends by 4% or more at an initial stress of 1.0 g/d, a textile may be suddenly deformed and damaged at the beginning.

Also, when a filament is subjected to a medium stress of 4.5 g/d, the filament extends by less than 12%. When the filament extends by 12% or more at a medium stress of 4.5 g/d, a human body may get burned by an exhaust gas due to a sudden increase in poromeric degree of the textile.

In addition, the polyethylene terephthalate multifilament extends by 3% or more until fibers are cut at a tensile strength of at least 7.0 g/d, so as to allow the textile to have a tensile strength and a tear strength which are suitable for use as an air bag. This is problematic because, when the textile extends by less than 3% until the fibers are cut at a tensile strength of at least 7.0 g/d, a maximum capability of the fibers to absorb a tensile load is insufficient. As a result, when the fibers are woven from the textile having a low weight, the tensile strength and tear strength of the fibers may not be sufficient.

According to the present invention, the polyethylene terephthalate multifilament for air bags has an elongation at break of 15% or more. When the elongation at break of the multifilament is less than 15%, an energy absorption capability when an air bag cushion suddenly expands may be degraded, and thus the cushion may burst.

According to the present invention, the polyethylene terephthalate multifilament for air bags has a maximum thermal stress of 0.2 to 0.6 g/d. A yarn may have an insufficient strength under conditions for production of yarn having a maximum thermal stress of less than 0.2 g/d, whereas the yarn may have a low elongation under conditions for production of yarn having a maximum thermal stress greater than 0.6 g/d. As a result, the air bag cushion may easily burst in the air bag cushion deployment test.

According to the present invention, the polyethylene terephthalate multifilament for air bags may preferably have a total fiber thickness of 150 to 1,000 deniers, more preferably 200 to 700 deniers. When the yarn having a total fiber thickness of less than 150 deniers is used, the textile for air bags may be insufficient in storage, but an air bag may be broken as a passenger collides against the air bag during or after deployment of the air bag. In contrast, when the total fiber thickness exceeds 1,000 deniers, the safety of the air bag may be satisfied due to sufficient strength thereof, but the storage of the air bag may be reduced due to an increase in thickness of the textile.

The multifilament constituting the textile for air bags has a single fiber thickness of 5 deniers or less, more preferably 4.5 deniers or less. In general, when fibers having a low single fiber thickness are used, the resulting textile is flexible, and thus has excellent foldability and good storage. Also, a covering property may be improved as the single fiber thickness decreases. As a result, it is possible to control the poromericity of the textile. When the single fiber thickness exceeds 5 deniers, the foldability and storage of the textile may be reduced, and the low poromericity may also be degraded. Therefore, the textile may not sufficiently function as the textile for air bags.

According to the present invention, a ratio of an F/F friction coefficient means a value obtained by dividing a coefficient of kinetic friction (F/F $\mu$s) between fibers of a polyethylene terephthalate yarn by a coefficient of kinetic friction (F/M $\mu$s) between fibers and metal. The ratio of the F/F friction coefficient is 1.5 or more. More preferably, a yarn whose ratio of the F/F friction coefficient is 2.0 or more may be suitably used for the textile for air bags. When the ratio of the F/F friction coefficient is less than 1.5, a friction coefficient between the fibers is insufficient, and thus a sewn welt portion may increasingly rupture in the air bag cushion deployment test.

In order to sufficiently increase the ratio of the F/F friction coefficient to 1.5 or more and secure good spinning workability, it is important to select a proper spinning emulsion. Either an emulsion type or a solvent type may be used as a type of a spinning emulsion. However, it is desirable to use an emulsion having a relatively higher F/F friction coefficient than an F/M friction coefficient. According to one exemplary embodiment of the present invention, a polyethylene terephthalate yarn for air bags may be prepared by spinning a spinning emulsion, which is selected from the emulsion types of spinning emulsions, at an OPU attachment content of 0.6%.

The polyethylene terephthalate fiber may be obtained using an air jet or water jet loom weaving machine. However, since a residual oil in the textile has to be present at a content of 0.1% by weight or less, the polyethylene terephthalate fiber may be prepared using the water jet loom weaving machine in consideration of the detachability of an emulsion attached to fibers. Also, the woven fiber may be subjected to a refining process and thermal setting at 160 to 190 °C.

When a textile is woven from the polyethylene terephthalate fiber it is desirable to weave a plain fabric having a symmetrical structure. In order to selectively obtain an attractive textile, a filament having a lower linear density may be woven from a 2/2 Panama woven fabric having a symmetrical structure.

The woven textile may be coated with a coating agent selected from the group consisting of a silicon-based coating agent, a polyurethane-based coating agent, an acrylic coating agent, a neoprene-based coating agent and a chloroprene-based coating agent at a content of 15 to 60 g/m$^2$, and used to secure the low poromericity that is suitable for use in the textile for air bags.

According to the present invention, physical properties of polyethylene terephthalate yarns of Examples and Comparative Examples were measured and evaluated, as follows.

1) Intrinsic viscosity (I.V.)

0.1 g of a test sample is dissolved for 90 minutes in a reagent (90 °C) obtained by mixing phenol with 1,1,2,2-tetrachloroethanol at a weight ratio of 6:4. Thereafter, the resulting sample solution is transferred to an Ubbelohde viscometer, and kept at 30 °C for 10 minutes in a thermostat. Then, a dipping time (second) of the sample solution is calculated using a viscometer and an aspirator. Also, a dipping time (second) of the solvent is obtained in the same manner as described above. Then, an R.V. value and an I.V. value are calculated using the following equations.

$$\text{R.V.} = \text{dipping time (second) of test sample/dipping time (second) of solvent}$$

$$\text{I.V.} = 1/4 \times [(\text{R.V.}-1)/C] + 3/4 \times (\ln \text{R.V.}/C)$$

In the equations, C represents a concentration (g/100 ml) of the test sample in the sample solution.

2) Measurement of thermal stress of yarn

A yarn is prepared into a loop having a diameter of 10 cm using a thermal stress tester (Model name: KE-3LS commercially available from KANEBO), and hung on upper/lower end hooks. Then, an initial load of 0.05 g/den is applied to the test sample, and the test sample is heated at a rate of 2.2 °C/second. In this case, stress caused in the test sample is measured and plotted as a graph.

3) Measurement of CEG content of yarn

A CEG content is analyzed using a test method "GG7" ((Geosynthetic Research Institute (GRI)), and indicated by units of mmol/kg.

4) Measurement of tenacity elongation of yarn

A yarn is kept for 24 hours in a constant temperature/humidity chamber which is maintained under standard conditions, that is, a temperature of 25 °C and 65% relative humidity, and the test samples is then measured according to ASTM 2256 method using a tensile tester.

5) Friction fastness of yarn

A coefficient of kinetic friction (F/F $\mu$s) between fibers is measured while rubbing yarns at a rate of 3 cm/min using a friction tester (Model name: YF-850 commercially available from TORAY). Also, a coefficient of kinetic friction (F/M $\mu$s) between fibers and a metal is measured while rubbing a Ni-coated metal with a yarn at a rate of 200 m/min. Then, a ratio of an F/F friction coefficient is calculated by dividing an F/F $\mu$s value by an F/M $\mu$s value.

6) Tensile strength of textile

Instron 4465 (commercially available from Instron, US) is kept for 24 hours under standard conditions (20 °C and 65% relative humidity) according to the ASTM D 5034 standard method. Then, a tensile strength of a textile having a width of 10 cm and a length of 15 cm is measured.

7) Tear strength of textile

Instron 4465 (commercially available from Instron, US) is kept for 24 hours under standard conditions (20 °C and 65% relative humidity) according to the ASTM D 2261 standard method. Then, a tear strength of a textile is measured.

8) Air permeability of textile

The air permeability of a textile is measured at a pressure of 125 Pa according to the ASDM 737 standard method using a Frazier air permeability tester.

9) Air bag cushion deployment test

A module is manufactured from a woven fabric for air bags and kept at 85 °C for 4 hours. Thereafter, a deployment test is performed on the module within 3 minutes to determine whether or not the module ruptures, and an evaluation of "PASS" or "FAIL" is made.

Hereinafter, the present invention will be described in detail with reference to the following Examples. However, it should be understood that these Examples are not intended to limit or define the scope of the present invention.

Example 1

A grey fabric for air bags was prepared from a polyethylene terephthalate yarn having characteristics listed in Table 1, using a water jet loom weaving machine, so that the plain fabric could have 50×50 textiles per 2,54 cm (1 inch). In this case, a spinning emulsion used herein was an emulsion (Trade name: TNX-021) having a relatively high F/F friction coefficient selected from emulsion-type spinning emulsions (commercially available from Takemoto) and spun at an OPU attachment content of 0.6%.

Comparative Example 1

A grey fabric for air bags was prepared from a polyethylene terephthalate yarn having characteristics listed in Table 1 in the same manner as in Example 1.

In this case, a spinning emulsion used herein was an emulsion (Trade name: TN-0071T) having a relatively high F/F friction coefficient selected from emulsion-type spinning emulsions (commercially available from Croda-Woo-Bang Cc., Ltd.) and spun at an OPU attachment content of 0.6%.

Table 1

| | Norm | Single fiber thickness (den) | Strength (g/den) | Elongation (%) | Ratio of F/F friction coefficient | Elongation (%) at 1.0 g/d | Elongation (%) at 4.5 g/d | Elongation at break (%) at 7.0 g/d | CEG content (mmol/ kg) |
|---|---|---|---|---|---|---|---|---|---|
| Example 1 | 500 d/l 20f | 4.2 | 9.0 | 22.6 | 3.16 | 0.9 | 9.7 | 5.1 | 25.4 |
| Comparative Example 1 | 500 d/l 20f | 4.1 | 9.1 | 20.3 | 1.43 | 0.9 | 9.8 | 5.3 | 25.2 |

(note: 1 den = 1,11 dtex; 1 g/d = 0,88 cN/dtex)

Example 2

The grey fabric prepared in Example 1 was passed through a water bath at 95 °C so that the grey fabric was refined and thermally contracted. Thereafter, the grey fabric was thermally fixed at 185 °C for 2 minutes. Then, a textile for air bags was prepared by coating the grey fabric with a silicon-based coating agent at a content of 25 g/m$^2$. The physical properties of the textile prepared thus were evaluated and an air bag cushion deployment test was also performed on the textile. The results are listed in the following Table 2.

Comparative Example 2

A textile for air bags was prepared by treating the grey fabric prepared in Comparative Example 1 in the same manner as in Example 2. Then, the physical properties of the textile were evaluated and an air bag cushion deployment test was also performed on the textile. The results are listed in the following Table 2.

Table 2

| | Tensile strength (warp yarn×weft yarn, kgf) | Tear strength (warp yarn×weft yarn, kgf) | Air permeability (CFM) | Air bag cushion deployment test |
|---|---|---|---|---|
| Example 2 | 223×221 | 27.3×27.7 | 0.1 or less | PASS |
| Comparative Example 2 | 219×215 | 27.0×28.6 | 0.1 or less | FAIL |
| (Note :1 kgf = 9,81 N; 1 CFM = 0,028 m$^3$/minute) | | | | |

Example 3

A grey fabric for air bags was prepared from a polyethylene terephthalate yarn, which was prepared through a spinning process under the conditions: a GR4 temperature of 250 °C, a GR5 temperature of 170 °C and a relax ratio of 9.2% to have characteristics listed in Table 3, using a water jet loom weaving machine, so that the plain fabric could have 50x50 textiles per 2,54 cm (1 inch).

Comparative Example 3

A grey fabric for air bags was prepared in the same manner as Example 3 from a polyethylene terephthalate yarn which was prepared in the same conditions as
A grey fabric for air bags was prepared in the same manner as Example 3 from a polyethylene terephthalate yarn which was prepared in the same conditions as Example 3 except for the conditions: a GR4 temperature of 175 °C, a GR5 temperature of 100 °C and a relax ratio of 1.9% in a spinning process, to have characteristics listed in Table 3

Table 3

| | Norm | Single fiber thickness (den) | Strength (g/den) | Elongation (%) | CEG content (mmol/ kg) | Maximum thermal stress (g/den) | Elongation (%) at 1.0 g/d | Elongation (%) at 4.5 g/d | Elongation at break (%) at 7.0 g/d |
|---|---|---|---|---|---|---|---|---|---|
| Example 3 | 500 d/l 20f | 4.2 | 9.0 | 22.6 | 25.1 | 0.29 | 0.9 | 9.7 | 5.1 |
| Comparative Example 3 | 630 d/ 4 8f | 13.2 | 8.1 | 12.3 | 25.3 | 0.53 | 0.8 | 5.4 | 4.0 |

Example 4

The grey fabric prepared in Example 3 was passed through a water bath at 95 °C so that the grey fabric was refined and thermally contracted. Thereafter, the grey fabric was thermally fixed at 185 °C for 2 minutes. Then, the grey fabric was coated with a silicon-based coating agent at a content of 25 g/m$^2$.

The physical properties of the textile prepared thus were evaluated and an air bag cushion deployment test was also performed on the textile. The results are listed in the following Table 4.

Comparative Example 4

A textile for air bags was prepared by treating the grey fabric prepared in Comparative Example 3 in the same manner as in Example 4. Then, the physical

Table 4

|  | Tensile strength (warp yarn×weft yarn, kgf) | Tear strength (warp yarn×weft yarn, kgf) | Air permeability (CFM) | Air bag cushion deployment test |
|---|---|---|---|---|
| Example 4 | 223×221 | 27.3×27.7 | 0.1 or less | PASS |
| Comparative Example 4 | 241×239 | 27.9×28.8 | 0.1 or less | FAIL |

While the invention has been shown and described with reference to certain exemplary embodiments thereof, it will be understood by those skilled in the art that various changes in form and details may be made therein without departing from the scope of the invention as defined by the appended claims.

**Claims**

1. A polyethylene terephthalate multifilament for air bags made by spinning polyethylene terephthalate chips having an intrinsic viscosity (IV) of 0.8 to 1.3,
   wherein the polyethylene terephthalate multifilament has a strength/deformation curve in which the polyethylene terephthalate multifilament extends by less than 4% when subjected to an initial stress of 0,883 cN/dTex (1.0 g/d) at room temperature, extends by less than 12% when subjected to a medium stress of 3.97 cN/dTex (4.5 g/d) and extends by 3% or more until fibers are cut at a tensile strength of at least 6.18 cN/dTex (7.0 g/d), has an elongation at break of 15% or more and a single fiber thickness of 5,555 dTex (5 deniers) or less, and the polyethylene terephthalate multifilament has a coefficient of kinetic friction of 1.5 or more, which is calculated by dividing an F/F coefficient of kinetic friction of a yarn by an F/M coefficient of kinetic friction of the yarn, has a carboxyl end group (CEG) content of 35 mmol/kg or less, has a carboxyl end group (CEG) content of 35 mmol/kg or less, and has a maximum thermal stress of 0.176 to 0.44 cN/dTex (0.2 to 0.5 g/d),
   wherein the intrinsic viscosity (I.V.), coefficient of kinetic friction, CEG, and maximum thermal stress values are determined by the methods specified in the description.

2. The polyethylene terephthalate multifilament for air bags according to claim 1, wherein the polyethylene terephthalate multifilament has a total fiber thickness of 166,666 to 1111.111 dTex (150 to 1,000 deniers).

3. A textile for air bags woven from the polyethylene terephthalate multifilament defined in claim 1.

4. A coated textile for air bags which is prepared by coating the textile for air bags defined in claim 3 with a coating agent selected from the group consisting of a silicon-based coating agent, a polyurethane-based coating agent, an acrylic coating agent, a neoprene-based coating agent and a chloroprene-based coating agent at a content of 15 to 60 g/m$^2$, and has the following physical properties:
   (1) Tensile strength: 1863,263 to 2941.995 N (190 to 300 kgf), (2) Tear strength: 245.166 to 392.266 N (25 to 40 kgf), and (3) Air permeability: 0.014 m$^3$ per minute (0.5 cubic feet per minute (CFM)) or less.

**Patentansprüche**

1. Polyethylenterephthalat-Multifilament für Airbags, hergestellt durch Spinnen von Polyethylenterephthalat-Chips mit einer intrinsischen Viskosität (I.V.) von 0,8 bis 1,3,

   wobei das Polyethylenterephthalat-Multifilament eine Festigkeits/Deformations-Kurve aufweist, gemäß der sich das Polyethylenterephthalat-Multifilament um weniger als 4 % dehnt, wenn es einer Anfangsbelastung von 0,883 cN/dTex (1,0 g/d) bei Raumtemperatur ausgesetzt wird, sich um weniger als 12 % dehnt, wenn es eine mittleren Belastung von 3,97 cN/dTex (4,5 g/d) ausgesetzt wird, und sich um 3 % oder mehr dehnt, bis die Fasern bei einer Zugbelastung von mindestens 6,18 cN/dTex (7,0 g/d) geschnitten werden, das Polyethylenterephthalat-Multifilament eine Reissdehnung von 15 % oder mehr und eine Einzelfaserdicke von 5,555 dTex (5 Deniers) oder weniger aufweist, und das Polyethylenterephthalat-Multifilament einen kinetischen Reibungskoeffizienten von 1,5 oder mehr, welcher durch Division eines F/F-Koeffizienten der Gleitreibung eines Garns durch einen F/M-Koeffizienten der Gleitreibung des Garns berechnet wird, einen Carboxylendgruppengehalt (CEG) von 35 mmol/kg oder weniger, und eine maximale thermische Belastbarkeit von 0,176 bis 0,44 cN/dTex (0,2 bis 0,5 g/d) aufweist,

   wobei die Werte der intrinsischen Viskosität (I.V.), des kinetischen Reibungskoeffizienten, des CEG und der maximalen thermischen Belastbarkeit durch die in der Beschreibung angegebenen Verfahren bestimmt werden.

2. Polyethylenterephthalat-Multifilament für Airbags nach Anspruch 1, wobei das Polyethylenterephthalat-Multifilament eine Gesamtfaserdicke von 166,666 bis 1111,111 dTex (150 bis 1.000 Deniers) aufweist.

3. Textilgewebe für Airbags, welches aus dem in Anspruch 1 definierten Polyethylenterephthalat-Multifilament gewoben wurde.

4. Beschichtetes Textilgewebe für Airbags, welches durch Beschichten des in Anspruch 3 definierten Textilgewebes für Airbags mit einem Beschichtungsmittel, das aus der Gruppe ausgewählt ist, welche aus einem Silicium-basierten Beschichtungsmittel, einem Polyurethan-basierten Beschichtungsmittel, einem Acryl-Beschichtungsmittel, einem Neopren-basierten Beschichtungsmittel und einem Chloropren-basierten Beschichtungsmittel besteht, in einem Anteil von 15 bis 60 g/m$^2$ hergestellt ist und die folgenden physikalischen Eigenschaften aufweist:
   (1) Zugfestigkeit: 1863,263 bis 2941,995 N (190 bis 300 kgf), (2) Reissfestigkeit: 245,166 bis 392,266 N (25 bis 40 kgf), und (3) Luftdurchlässigkeit: 0,014 m$^3$ pro Minute (0,5 Kubikfuss pro Minute (CFM)) oder weniger.

**Revendications**

1. Polyéthylène téréphtalate multifilament pour des coussins de sécurité fabriqués par filage de copeaux de polyéthyène téréphtalate ayant une viscosité intrinsèque (IV) de 0,8 à 1,3,

   dans lequel le polyéthylène téréphtalate multifilament a une courbe de résistance/déformation dans laquelle le polyéthylène téréphtalate multifilament s'étend de moins de 4 % lorsqu'il est soumis à une contrainte initiale de 0,883 cN/dTex (1,0 g/d) à température ambiante, s'étend de moins de 12 % lorsqu'il est soumis à une contrainte moyenne de 3,97 cN/dTex (4,5 g/d) et s'étend de 3 % ou plus jusqu'à ce que les fibres soient coupées à une résistance à la traction d'au moins 6,18 cN/dTex (7,0 g/d), a un allongement à la rupture de 15 % en plus et une épaisseur de fibre individuelle de 5555 dTex (5 deniers) ou moins, et le polyéthylène téréphtalate multifilament a un coefficient de friction cinétique de 1,5 ou plus, qui est calculé en divisant un coefficient F /F de friction cinétique d'un fil à un coefficient F/M de friction cinétique du fil, a une teneur en groupe carboxyle terminal (CEG) de 35 mmoles/kg ou moins, a une teneur en groupe carboxyle terminal (CEG) de 35 mmoles/kg ou moins, et a une contrainte de résistance thermique maximale de 0,176 à 0,44 cN/dTex (0,2 à 0,5 g/d),

   dans lequel le coefficient de viscosité intrinsèque (I.V.) de fraction cinétique, CEG, et les valeurs de contrainte thermique maximale sont déterminés par les procédés spécifiés dans la description.

2. Polyéthylène téréphtalate multifilament pour coussins de sécurité selon la revendication 1, dans lequel le polyéthylène téréphtalate multifilament a une épaisseur de fibre totale de 166,666 à 1111,111 dTex (150 à 1000 deniers).

3. Textile pour coussins de sécurité tissés en polyéthylène téréphtalate multifilament défini dans la revendication 1.

4. Textile revêtu pour des coussins de sécurité qui est préparé en revêtant le textile pour coussins de sécurité défini dans la revendication 3 avec un agent de revêtement sélectionné dans le groupe consistant en un agent de revêtement à base de silicium, un agent de revêtement à base de polyuréthane, un agent de revêtement acrylique, un agent de revêtement à base de néoprène et un agent de revêtement à base de chloroprène à une teneur de 15 à

60 g/m$^2$, et a les propriétés physiques suivantes :

(1) résistance à la traction : 1863,263 à 2941,995 N (190 à 300 kgf, (2) résistance à la déchirure : 245,166 à 392,266 N (25 à 40 kgf), et (3) perméabilité à l'air : 0,014 m$^3$ par minute (0,5 pied cube par minute (CFM)) ou moins.